# EUROPEAN PATENT SPECIFICATION

(11) **EP 1 900 692 B1**
(45) Date of publication and mention of the grant of the patent: **09.03.2011**
(21) Application number: 07253510.7
(22) Date of filing: 05.09.2007
(51) Int. Cl.: C02F 1/28

(54) **Water purification system**
Wasseraufbereitungssystem
Système de purification d'eau

(30) Priority: 07.09.2006 US 842745 P; 16.08.2007 US 893563
(43) Date of publication of application: 19.03.2008
(73) Proprietor: Rohm and Haas Company, Philadelphia, PA 19106-2399 (US)
(72) Inventor: Trejo, Jose Antonio, Lansdale, PA 19446 (US); Banavali, Rajiv Manohar, Rydal, PA 19046 (US)
(74) Representative: Buckley, Guy Julian

(56) References cited:
- EP-A- 0 436 124
- EP-A- 1 344 564
- WO-A-01/54786
- WO-A-2005/082523
- JP-A- 1 127 094
- US-A1- 2002 074 292
- US-A1- 2004 262 225
- US-A1- 2006 186 054

## Description

The present invention relates to a water purification system consisting of multiple layers of media for removing toxic impurities from water or other aqueous solutions.

Purification or filtration of water or other aqueous solutions is necessary for many applications, from the provision of safe or potable drinking water to biotechnology applications including fermentation processing and separation of components from biological fluids, and to industrial processes that require waste stream treatment and recovery of process chemicals. In recent years, the need for water filtration and purification in the home has become more recognized, and the competing concerns of energy efficiency and residential fluid quality have lead to the development of numerous filtration products.

There are many well-known methods currently used for water purification, such as reverse osmosis, distillation, ion-exchange, chemical adsorption, coagulation, and filtering or retention. Particle filtration may be completed through the use of membranes or layers of granular materials. Other fluid purification techniques involve chemical introduction which alters the state or chemical identity of the contaminant. One such filtration system is disclosed in US 6383395.

In many fluid purification applications, including the one disclosed in US 6383395, a combination of techniques are required in order to completely purify fluids, such as water. Combinations of technologies may be implemented by combining functions in a single device or using several different devices and technologies in series where each performs a distinct function. Examples of this practice include the use of mixed ion- exchange resins that remove both negative and positively charged chemical species and oxidation/filtration methods where oxidizers are used to generate particulate matter that may be subsequently filtered.

Many of these fluid purification technologies, techniques, and practices are costly, energy inefficient and/or require significant technical know-how and sophistication to implement on both large and small scales. As a result, many advanced fluid purification technologies have had limited application in residential point of entry (POE) and point of use (POU) applications; particularly in Third World countries who require efficient water purification systems at low cost.

US 2006/0186054 A1 discloses an arsenic removal medium to remove arsenic (v) from water, comprising particles of calcium carbonate minerals and magnesium carbonate aggregates.

The present invention has solved this problem by providing a cost and energy efficient water purification filtration system whose primary purpose is to remove naturally occurring arsenic from water, but is also capable of removing other heavy metals and organics. The gravity operated system is simple, robust, and affordable for homeowner use in undeveloped areas of the world, where electricity is not widely available and more expensive technologies are not affordable. In the present invention there is provided a device as claimed in claim 1 for purifying solutions comprising:
i. a first container
ii. an inlet tube comprising two ends wherein the first end of the inlet tube extends into the first container;
iii. a cartridge having two ends comprising media wherein the second end of the inlet tube attaches to the cartridge
iv. an outlet tube comprising two ends wherein the first end of the outlet tube extends from the cartridge; and
v. a second container wherein the second end of the outlet tube extends into the second container
wherein the media comprises: limestone particles at least partially coated with an iron oxyhydroxide, activated carbon, and uncoated limestone particles.

Additionally, the two ends of the cartridge comprise an upper end and a lower end wherein the upper end is in the upper third of the cartridge and the lower end is in the lower third of the cartridge. Alternatively, the second end of the inlet tube may attach to the lower end of the cartridge. Still another alternative is for the first end of the outlet tube to extend out of the upper end of the cartridge. In addition to being used independently, these alternatives may also be employed in combination in the system.

According to the present invention, the media contained in the first container is limestone, iron activated carbon and iron coated limestone particles. The iron content for the activated carbon is between 3 and 15 weight percent as measured by iron on a dry basis. The iron content for the iron coated limestone is between 2 and 10 weight percent as measured by percent iron on a dry basis. The particle size of the activated carbon used is ranges from 500 to 1190 µm (microns) and the particle size of the limestone ranges from 76 to 600 µm (microns). The BET of the iron coated limestone is 25-35 m2/g with pore diameter 30-48 x 10⁻¹⁰ m (Angstroms).

This-configuration of media allows for the removal of arsenic and other heavy metals and organic toxins. Such toxins include but are not limited to Fe, Pb, Cd, Cu, Cr, Hg, Ni, Al, Sb, Ba, Be, Mn, Se, Ra, and Th. Furthermore anions in water such as arsenate, phosphate, silica, fluoride, borate, chromate, arsenite, nitrate, nitrite and uranyl; natural organic matter such as humic acid, and cyano compounds may be removed by the present invention.

Control of the pH of the effluent is a benefit of the system of the present invention. The pH of the water or other aqueous solutions will range from 7.8 to 8.3. This pH range is especially beneficial for providing potable water.

The present invention further provides a water purifying assembly comprised of a water inlet tube, valves, a cartridge or first container with treatment media and water outlet tube. The water inlet tube can be connected to a locally supplied water feed container. The discharge through the outlet tube from the cartridge or container directs purified water to a second container or receptacle vessel. The cartridge or first container may optionally be connected to a detachable mounting board for stability. Additionally, the water purification assembly may employ various means for controlling the flow of the fluid through the system. Such means include but are not limited to: gravity, pressure fed, and pump assisted flow. Each of these methods is dependant on the particular application; for example whether the system is for commercial use or for residential or for the type of fluid that is being used in the system.

### BRIEF DESCRIPTION OF THE DRAWINGS

FIG. 1a is a cross-sectional view of a cartridge constructed according to the teachings of the present invention. In this illustration the media is horizontally packed into the cartridge.
FIG. 1b is a cross-sectional view of an alternate design for the cartridge constructed according to the teachings of the present invention. Fig. 1b illustrates how the media may also be vertically packed within the cartridge.
FIG. 1c is a cross-sectional view of one alternative for packing of the three layers of media.
FIG. 2 is a view of a water purification assembly according to the teachings of the present invention.

### DETAILS

### REFERENCE NUMERALS

- 1: filter 1
- 2: untreated limestone
- 3: filter 2
- 4: iron imbibed activated carbon
- 5: iron activated limestone
- 6: cartridge
- 7: inlet end
- 8: outlet end
- 9: media
- 10: pleated filter
- 20: untreated limestone packing
- 21: iron imbibed activated carbon packing
- 22: iron activated limestone packing
- 30: first feed container
- 31: first end of the inlet tube
- 32: inlet tube
- 33: second end of the inlet tube
- 34: cartridge (full outer view)
- 35: outlet end of cartridge
- 36: outlet tube
- 37: second end of the outlet tube
- 38: second container
- 39: spigot
- 40: flow control valve
- 41: inlet end of cartridge
- 42: first end of the outlet tube

### DETAILED DESCRIPTION OF THE DRAWINGS

### Cartridge

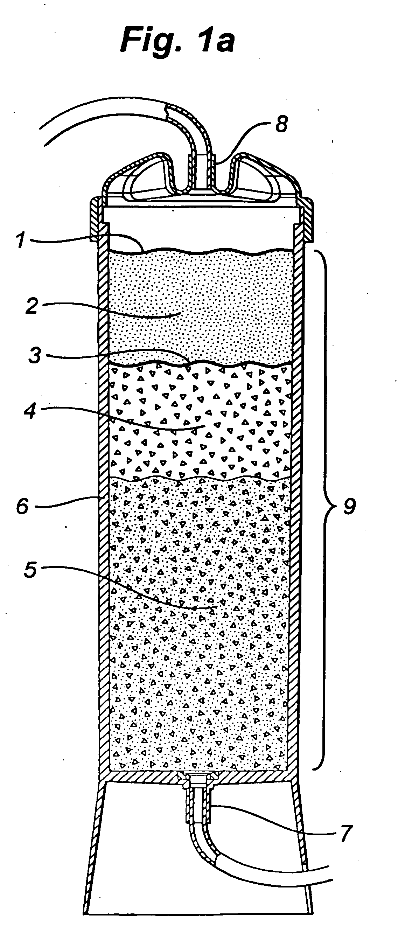

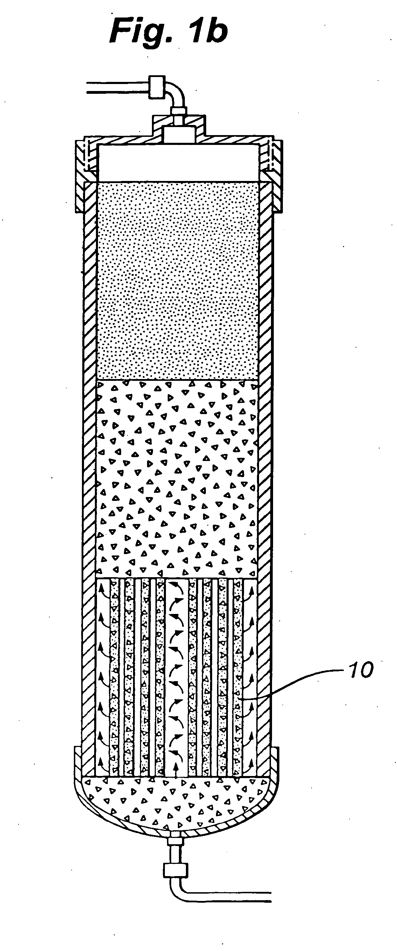

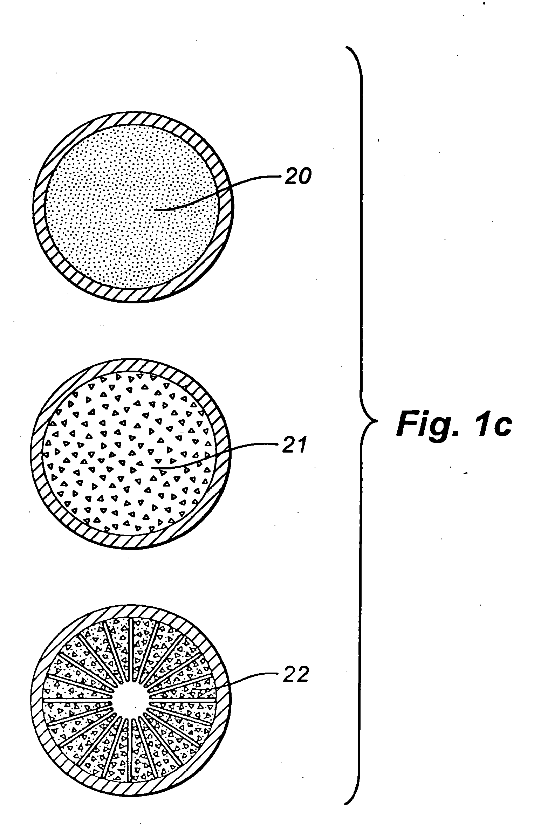

A cartridge design for residential use is shown in Figure 1a. Although Fig. 1a depicts one design of a cartridge, the figure is not intended to be limiting. One of ordinary skill in the art would recognize that this design is not limited to residential use but may be expanded and/or modified for commercial use. As depicted in Fig. 1, for residential use, the cartridge (6) can be fabricated from typical polymeric materials, for example, polyvinyl chloride, polypropylene, polyethylene, polyethylenterephtalate, ceramic, metal or natural materials. The internal volume can be varied to suit the particular media (9) loading need for the targeted liquid composition which can vary. A typical height of the column for household use ranges from .20 - .50 meters. Typical internal volume is the range of 0.1 to 10 liters, preferably 2 to 3 liters. Typical internal volume for municipal systems could be up to 10000 liters, or with up to 100 cartridges arranged in a parallel flow pattern. The cartridge is free standing on a base and contains inlet (7) and outlet (8) ends, optionally nozzles properly sized to fit any given tubing.

The cartridge is filled with the media (9) described in Table 1. These ingredients ensure arsenic and heavy metal removal from water, as well as water that is colorless and odorless

**Table 1 Contents of column**

| |
|---|
| Filter 1 (1) |
| untreated limestone (2) |
| Filter 2 (3) |
| iron imbibed activated carbon (4) |
| iron activated limestone (5) |

The range in %-volume of the different media can be defined to be 1-70 % for the limestone untreated material 0-70 % for the iron imbibed activated carbon, and 30% - 99% for the iron coated limestone. The preferable range in % volume: for the media is 25-30% untreated limestone, 18-22% iron-activated carbon and 48-54% iron coated limestone.

An alternative cartridge design concept is shown in Figure 1b. This design uses pleated filter (10) media to guide the water through a more plug flow pattern to prevent channeling and more efficiently uses the media.

Figure 1c shows a cross-sectional view of each of the three layers of packing. The first illustration (20) depicts the untreated limestone packed into the cartridge. The second illustration (21) depicts the iron imbibed activated carbon packed into the cartridge. The third illustration (22) depicts the iron activated limestone packed in a pleated formation into the cartridge.

### Water Purifying assembly

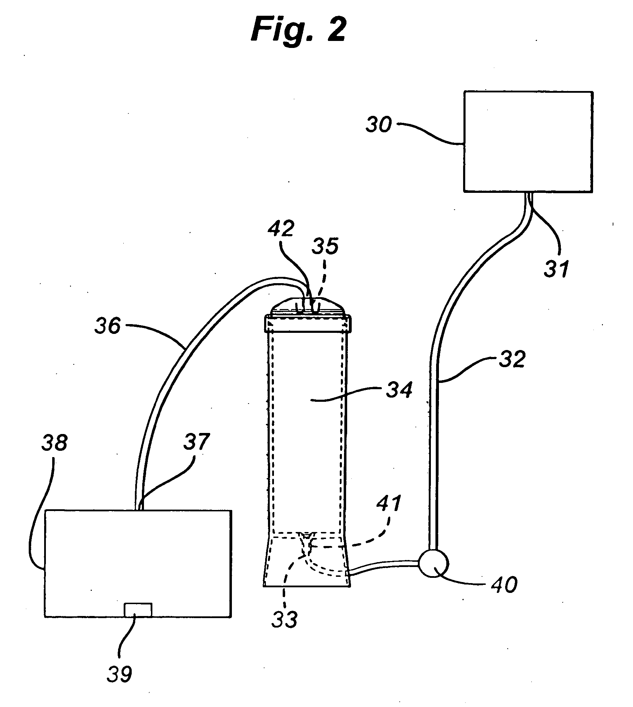

One design for an entire water purifying assembly for residential use is shown in Figure 2. The system, as depicted in Fig. 2, is designed to require minimal assembly. The figure is not meant to limit the invention to the representation presented. It is conceivable that one of ordinary skill in the art may modify and or expand this representation so that it is practical for commercial and other uses. However, with regard to the figure depicted, a potential user will fill the first feed container (30) with an untreated solution. In the case of a gravity operated system, the height differential between the feed container (30) and the cartridge (34) provides sufficient head pressure for water to flow by gravity through the first end (31) of the inlet tube (32), through to the second end (33) of the inlet tube to the inlet end of the cartridge (41). Optionally, a flow control valve (40) may be incorporated onto the inlet tube to control the flow rate of the fluid. Ideally, the flow control valve (40) is set to a specific location so that the starting flow rate is between 50 and 500 ml/min, preferably between 100-200 ml/min. Water flow through the column is from bottom to top which allows for the use of a minimal amount of media during flow and relatively steady flow rate during the life of the cartridge (34). Treated water will pass from the outlet of the cartridge (35) through the first end of the outlet tube (42), through the outlet tube (36), through the second end of the outlet tube (37) and into the second container (38) for storage which is optionally equipped with a spigot for dispensing the water (39).

### EXAMPLES

### Example 1

The system was set up as shown in Figure 2. A 50 liter carboy of deionized water was spiked with 150 ppb As(III) and 150 ppb As(V), 2 ppm Fe(II). The solution measured at pH 6.5. The cartridge column was packed with 1.0 liters of iron activated limestone 0.2-0.5 mm, 0.5 liters of untreated limestone, and 0.5 liters of iron activated carbon, (See figure 1). 0.95 cm (3/8") tubing was connected from a first source container to column; air was bled out of line; and the flow control valve was set for initial flow rate of 180 ml/minute. Water flowing out of the column was collected in a 50 liter second container and analyzed periodically during the run.

Tests have been conducted that demonstrate the treatment of 20- and 50-liter batches of arsenic-containing water at an average flow rate of 160 ml/min. One cartridge has been shown to treat more than 4,000 liters of water by running multiple batches per day over several weeks. Arsenic III and V have been reduced from 300 ppb (150 ppb each III and V) to less than 10 ppb over this several week period. Furthermore other benefits were realized such as the reduction of other ions, pH control and improvement in water color and clarity.
Table 2 below illustrates this proposition

**Table 2. Arsenic Concentration vs Total Water Flowed Through System**

| Accumulated Liters | As III and V (ppb) |
|---|---|
| 0 | 0 |
| 100 | 0 |
| 200 | 0 |
| 300 | 0 |
| 400 | 0 |
| 500 | 0 |
| 600 | 0 |
| 700 | 0 |
| 800 | 0 |
| 900 | 0 |
| 1000 | 0 |
| 1100 | 0 |
| 1200 | 0 |
| 1300 | 0 |
| 1400 | 0 |
| 1500 | 0 |
| 1600 | 0 |
| 1700 | 0 |
| 1800 | 0 |
| 1900 | 0 |
| 2000 | 0 |
| 2100 | 0 |
| 2200 | 0 |
| 2300 | 0 |
| 2400 | 1 |
| 2500 | 1 |
| 2600 | 1 |
| 2700 | 1 |
| 2800 | 1 |
| 2900 | 1 |
| 3000 | 1 |
| 3100 | 2 |
| 3200 | 2 |
| 3300 | 2 |
| 3400 | 2 |
| 3500 | 3 |
| 3600 | 3 |
| 3700 | 3 |
| 3800 | 3 |
| 3900 | 5 |
| 4000 | 5 |

The influent water, prior to running through the system contained 300 ppb As, 2ppm Fe(II) and had a pH of 6.5. Arsenic was measured by ICP-MS.

## Claims

1. A device for purifying solutions comprising:
i. a first container
ii. an inlet tube comprising two ends wherein the first end of the inlet tube extends into the first container;
iii. a cartridge having two ends comprising media wherein the second end of the inlet tube attaches to the cartridge
iv. an outlet tube comprising two ends wherein the first end of the outlet tube extends from the cartridge; and
v. a second container wherein the second end of the outlet tube extends into the second container
wherein the media comprises: limestone particles at least partially coated with an iron oxyhydroxide, activated carbon, and uncoated limestone particles,
wherein the iron content for the iron coated limestone is between 2 and 10 weight percent as measured by percent iron on a dry basis, the iron content for the activated carbon is between 3 and 15 weight percent as measured by iron on a dry basis, the particle size of the activated carbon ranges from 500 to 1190 µm (microns), the particle size of the limestone ranges from 76 to 600 µm(microns), and the BET of the iron coated limestone is 25-35 m²/g with pore diameter 30-48 ×10⁻¹⁰m (Angstroms).

2. The device of claim 1 wherein the device comprises a pump.

3. The device of claim 1 wherein the two ends of the cartridge comprise an upper end and a lower end wherein the upper end is in the upper third of the cartridge and the lower end is in the lower third of the cartridge.

4. The device of claim 3 wherein the second end of the inlet tube attaches to the lower end of the cartridge.

5. The device of claim 3 wherein the first end of the outlet tube extends out of the upper end of the cartridge.

6. The device of claim 4 wherein the first end of the outlet tube extends out of the upper end of the cartridge.

7. A method of removing toxic impurities from aqueous solutions, the method comprising use of a device as claimed in claim 1.

8. A method according to claim 7, wherein the toxic impurities are selected from the group consisting of: Fe, Pb, Cd, Cu, Cr, Hg, Ni, Al, Sb, Ba, Be, Mn, Se, Ra, Th, arsenate, phosphate, silica, fluorite, borate, chromate, arsenite, nitrate, nitrite, uranyl, humic acid, and cyano compounds.

## Patentansprüche

1. Vorrichtung zum Reinigen von Lösungen, die umfasst:
i. einen ersten Behälter
ii. ein Einlassrohr, das zwei Enden umfasst, wobei das erste Ende des Einlassrohrs sich in den ersten Behälter erstreckt;
iii. eine Kassette bzw. einen Einsatz mit zwei Enden, der ein Medium umfasst, wobei das zweite Ende des Einlassrohrs an den Einsatz anschließt
iv. ein Auslassrohr, das zwei Enden umfasst, wobei das erste Ende des Auslassrohrs sich von dem Einsatz erstreckt; und
v. einen zweiten Behälter, wobei das zweite Ende des Auslassrohrs sich in den zweiten Behälter erstreckt
wobei das Medium umfasst: Kalksteinpartikel, die zumindest teilweise mit einem Eisenoxihydroxid beschichtet sind, Aktivkohle und unbeschichtete Kalksteinpartikel,wobei der Eisengehalt für den eisenbeschichteten Kalkstein in Eisenprozent auf einer trockenen Basis gemessen zwischen 2 und 10 Gewichtsprozent beträgt, wobei der Eisengehalt für die Aktivkohle nach Eisen auf einer trockenen Basis gemessen zwischen 3 und 15 Gewichtsprozent ist, wobei die Partikelgröße der Aktivkohle von 500 bis 1190 µm (Mikrometer) reicht, die Partikelgröße des Kalksteins von 76 bis 600 µm (Mikrometer) reicht, und das BET des eisenbeschichteten Kalksteins 25 - 35 m²/g mit einem Porendurchmesser von 30 - 48 x 10⁻¹⁰ m (Angström) ist.

2. Vorrichtung nach Anspruch 1, wobei die Vorrichtung eine Pumpe umfasst.

3. Vorrichtung nach Anspruch 1 wobei die zwei Enden des Einsatzes ein oberes Ende und ein unteres Ende umfassen, wobei das obere Ende in dem oberen Drittel des Einsatzes ist und das untere Ende in dem unteren Drittel des Einsatzes ist.

4. Vorrichtung nach Anspruch 3, wobei das zweite Ende des Einlassrohrs an das untere Ende des Einsatzes anschließt.

5. Vorrichtung nach Anspruch 3, wobei das erste Ende des Auslassrohrs sich aus dem oberen Ende des Einsatzes erstreckt.

6. Vorrichtung nach Anspruch 4, wobei das erste Ende des Auslassrohrs sich aus dem oberen Ende des Einsatzes erstreckt.

7. Verfahren zum Entfernen von toxischen Verunreinigungen in wässrigen Lösungen, wobei das Verfahren die Verwendung einer Vorrichtung nach Anspruch 1 umfasst.

8. Verfahren nach Anspruch 7, wobei die toxischen Verunreinigungen aus der Gruppe ausgewählt sind, die besteht aus: Fe, Pb, Cd, Cu, Cr, Hg, Ni, Al, Sb, Ba, Be, Mn, Se, Ra, Th, Arsenat, Phosphat, Siliziumoxid bzw. Kieselerde, Fluorid, Borat, Chromat, Arsenit, Nitrat, Nitrit, Uranyl, Huminsäure und Cyano-Verbindungen.

## Revendications

1. Dispositif pour purifier des solutions comprenant :
(i) un premier récipient
(ii) un tube d'entrée comprenant deux extrémités où la première extrémité du tube d'entrée s'étend dans le premier récipient ;
(iii) une cartouche ayant deux extrémités comprenant un milieu où la seconde extrémité du tube d'entrée est fixée à la cartouche
(iv) un tube de sortie comprenant deux extrémités où la première extrémité du tube de sortie s'étend depuis la cartouche ; et
(v) un second récipient où la seconde extrémité du tube de sortie s'étend dans le second récipient
où le milieu comprend : des particules de calcaire recouvertes au moins en partie d'un oxyhydroxyde de fer, du carbone activé, et des particules de calcaire non recouvertes, où la teneur en fer pour le calcaire recouvert de fer est encre 2 et 10 % en poids telle qu'elle est mesurée par le pourcentage de fer sur une base sèche, la teneur en fer pour le carbone activé est entre 3 et 15 % en poids telle qu'elle est mesurée par le fer sur une base sèche, la taille de particule du carbone activé va de 500 à 1190 µm (micromètres), la taille de particule du calcaire va de 76 à 600 µm (micromètres), et la BET du calcaire recouvert de fer est 25-35 m²/g avec un diamètre de pores de 30-48 x 10⁻¹⁰m (Angströms).

2. Dispositif selon la revendication 1 où le dispositif comprend une pompe.

3. Dispositif selon la revendication 1 où les deux extrémités de la cartouche comprennent une extrémité supérieure et une extrémité inférieure où l'extrémité supérieure est dans le tiers supérieur de la cartouche et l'extrémité inférieure est dans le tiers inférieur de la cartouche.

4. Dispositif selon la revendication 3 où la seconde extrémité du tube d'entrée est fixée à l'extrémité inférieure de la cartouche.

5. Dispositif selon la revendication 3 où la première extrémité du tube de sortie s'étend depuis l'extrémité supérieure de la cartouche.

6. Dispositif selon la revendication 4 où la première extrémité du tube de sortie s'étend depuis l'extrémité supérieure de la cartouche.

7. Procédé de retrait d'impuretés toxiques de solutions aqueuses, le procédé comprenant l'utilisation d'un dispositif selon la revendication 1.

8. Procédé selon la revendication 7 où les impuretés toxiques sont choisies dans le groupe consistant en : Fe, Pb, Cd, Cu, Cr, Hg, Ni, Al, Sb, Ba, Be, Mn, Se, Ra, Th, arséniate, phosphate, silice, fluorure, borate, chromate, arsénite, nitrate, nitrite, uranyle, acide humique, et composés cyans.
